# EUROPEAN PATENT SPECIFICATION

(11) **EP 0 593 465 B1**
(45) Date of publication and mention of the grant of the patent: **04.09.1996**
(21) Application number: 91911740.8
(22) Date of filing: 28.06.1991
(51) Int. Cl.: C02F 1/14, B01D 1/00, F03G 6/00

(54) **PLANT FOR SEA WATER DESALINIZING USING SOLAR ENERGY PREFERABLY ACCOMPANIED BY ELECTRIC POWER GENERATION**
ANLAGE ZUR MEERWASSERENTSALZUNG MITTELS SONNENENERGIE, VORZUGSWEISE IM ZUSAMMENHANG MIT ELEKTRIZITÄTSERZEUGUNG
USINE DE DESSALEMENT DE L'EAU DE MER UTILISANT L'ENERGIE SOLAIRE, DE PREFERENCE CONJOINTEMENT AVEC LA GENERATION D'ENERGIE ELECTRIQUE

(43) Date of publication of application: 27.04.1994
(73) Proprietor: GÖDE, Gabor, H-1126 Budapest (HU)
(72) Inventor: GÖDE, Gabor, H-1126 Budapest (HU)
(74) Representative: Beszédes, Stephan G., Dr.
(86) International application number: HU9100028
(87) International publication number: WO9300299

(56) References cited:
- DE-A- 3 232 658
- DE-A- 3 509 599
- DE-A- 3 509 601
- US-A- 4 330 373
- IBM Technical Disclosure Bulletin, Volume 25, No. 2, issued 1982 July by IBM Corp., O. ALAMEDDINE, "Self-Regulating Vacuum Desalinator", see pages 795-797.

## Description

The invention is aimed at a plant for sea water desalinizing using solar energy preferably accompanied by electric power generation. The plant consists of the following units: sea water storage tank, evaporator tank or tanks connected to the pre-heating tank, thermal source producing heat for evaporation, connected to the evaporator tank, and storage tank for distilled water evaporated in the evaporator tank and condensed in the heat-exchanger.

A significant number of the countries by the seaside and the tropical and subtropical ones resp. in their ambiency, as well as the vast insular world of the tropics have to cope with the problem of the supply of potable water being not always available even now at a reasonable price

Potable and industrial water supply of large cities and industrial establishments of the mentioned areas has already been solved by means of sea water desalinizing but potable water to small seaside habitations must be transferred either from long distances, or their needs should be covered partly by the potable water produced in large desalinizing plants. Apart from being expensive, both solutions set limits to water consumption.

At present there are seven important traditional processes for sea water desalinizing, i.e.:
- Thermocompression
- Ion-exchanging and electrolysis
- Single-flow topping in more stages
- Topping in more stages by means of air circulation
- Reverse osmosis
- Multi-effect evaporation and
- Mechanical steam compression.

Apart from the methods described above, there are also processes using solar energy for desalinizing.

Thermocompression can be performed in one or more stages. The latter is much more profitable. As far as rentability is concerned, it should be mentioned that electric power costs 3,6 times more than steam power.

Due to electric power being rather expensive, the application of ion-exchanging and electrolysis gradually loses its importance.

From among the above listed processes, reverse osmosis can be considered as the most efficient method, since it requires 33-50 % less power compared to the other processes. This method requires water pretreatment too by decarbonization using caustic lime, partial softening by means of sodium carbonate, then desilication for which purpose sodium aluminate and ferrochloride are to be used. The water is then flocculated by means of filters, and finally is filtered by sand.

In case of the evaporation processes, steam is to be generated in tradiional crude oil-, stone coal- or gas-fired boilers, it is then conducted into the single-effect or multiple-effect evaporators provided with heating pipes. Being more rentable, generally the multiple-effect evaporators are used at paresent. The vapour produced in the evaporator is routed through the drop-catcher where it is cooled to be condensed.

If multiple-effect evaporator is used, the condensation of vapour - conducted through the heating pipe of the subsequent evaporators -, generates heat energy which can be utilized. The condensed vapour is then taken off.

The equipment and processes briefly described above are based on some of the traditional energies and sources of energy that should be taken into consideration at their implementation. Due to the considerable quantity of fuel required for their operation, these units can be installed only where continuous power supply is undisturbed and the unconditionally required infrastructure (road and electric network, public services, etc.) is available.

High operating expenses and considerable environment pollution during their operation mean further disadvantages of these methods.

Solar energy plants known so far apply flat collectors for heating salt-water. A thermal pump will increase the temperature of the water so heated which is then submitted to evaporation by vacuum.

There is another process which uses heated water in the flat collectors as heat-carrying agent that is passed into a Rankine boiler where Freon 11 of low boiling point is evaporated. This high-pressure gas, operating a turbogenerator, generates electric power, while the evaporation of the salt water is performed by a heat pump using the condensation heat energy.

The greatest disadvantage of these processes presents itself in the low efficiency of the flat collectors used for energy collection and in the fact that additional power source (electric power) is also required for the evaporation of salt water.

Contrary to the traditional as well as the above described solar energy equipment the unit being subject of the invention uses solely solar energy utilizing the collected and concentrated thermal power of solar radiation at a very favourable efficiency.

The aim of the invention is the implementation of an equipment that is capable of supplying even small habitations with potable water in a rentable manner, at low cost and without polluting the environment.

The invention that meets totally this aim, is based on the principle of using parabolic collectors composed of module elements from which a collecting unit of the required size can be obtained. This construction will enable the heating of the heat carrying agent up to several hundreds centigrades where evaporation consequently, can take place at a more favourable efficiency.

On basis of those mentioned above, the most general realization of the invention presents itself in an equipment for desalination of sea water by the utilization of solar energy, advantageously accompanied with electric power generation, containing the heat caption unit 1 that automatically follows the movement of the sun serving as a heat source, the sea water collecting tank 10, the pre-heating tank 11, the heat receiver 20 that ensures the energy supply, and the condensers 2, 3, 4 connected in line; the distilled water storage tanks 13 characterized by the fact that the sea water collecting tank 10 and the pre-heating tank 11 that pre-heats the sea water and cools the distilled steam are situated beside each other by level difference and that the adjoining walls of the two tanks have an opening for through-flow 11a or a through-flow tube.

The discharge duct 8 of the pre-heating tank 11 is led into the condensers where the first condenser 2 is provided by a heater 72 heated by the heating agent, the second and the subsequent evaporators 3 are provided by a heating system consisting of pipe rings 73a utilizing hot vapour and pipes connecting the pipe rings. Further, parabolic collector(s) 1 made up of module elements serve(s) as heat caption unit(s) for the heating of the heat transferring agent that heats the first condenser 2. Its (their) heat collecting unit(s) that hold(s) the heating agent is (are) of funnel-shape at the bottom hollow, and the wall of the conical hollow is covered with a high heat-resistant metal or ceramic coating. Inside the heat receiver 20 there are baffle plates 38 or pipe bundles for the heating of the heat transferring agent, where the inlet pipe of the receiver 20 is led to the discharge opening of the first condenser 2 discharging the cooled agent, while the discharge pipe of the heated agent is led to the hot agent inlet opening of the first condenser 2.

Another possible construction of the parabolic collector i.e. a big-diameter, movable collector following the position of the sun, requires an extremely expensive and complicated moving structure which means its greatest disadvantage according to the technical literature.

The construction and operaton of the largest (dia. 37.6 - 41.1 m) movable parabolic collectors, known so far following the position of the sun, are covered by the scientific description of Prof. Dr. Ing. Karl Bammert and Dr. Ing. Ahmed Hegazy: Optimierung von solar beheizten Hohlraumstrahlungsempfangern mit Paraboloidkollektoren" (FORTSCHRITTBERICHTE DER VDI ZEITSCHRIFTEN Reihe 6. Nr. 160, 1984). Considering the very expensive moving and other structural elements of this type of parabolic collectors, operated up to now with experimental character only, these types have not become popular.

The collector, subject of the present invention, eliminates the disadvantages one has to cope with if the known parabolic collectors with complicated and expensive moving structure and construction are used.

This is due to the simple and inexpensive hydraulically actuated ball-and-socket moving structure, as well as to the application of simple, cheap and easily mountable module elements that are suitable for serial production. These advantages make mass production of the unit rentable and of high efficiency.

The great advantage of the plastic structure parabolic collector, subject of the invention, presents itself in its light weight due to its glass-texture reinforced synthetic resin structure of low specific weight that lends an extremely great strength to the unit at the same time. The shape keeping material is easily processable with great accuracy, it is glueable, so the structural elements can easily and quickly be connected even on the site of installation.

The solar collector is parabolic shaped with reflecting internal surface. At the middle it is supported by a ball-and-socket structure bearing the total weight of the unit, rotatable at any direction within a given range, furthermore, it is supported by rods movable in longitudinal direction in a telescope like manner, fixed to one of the reinforced annular ribs. One of the two opposite rods is provided with an electric signal controlled driving structure,while the remaining ones are equipped with controllable interlocking structure fixing their position. The upper orifice of the collector forms a reinforced ring, whereto a supporting unit is connected composed of two or more supporting rods connecting to the supporting ring with their upper end. The receiver, storing the heat transferring agent and heating it by means of solar energy, is fixed here to the supporting ring clamping the rods at their internal end.

The low weight and relatively high mechanical strength of the parabolic solar collector are guaranteed by its frame structure constructed of "vertical", glass-texture reinforced, ovally bent ribs as well as annular rings running perpendicularly to the ribs. The upper ring and the bottom one fix the "vertical" ribs by pin joint which is completed by gluing. The parabolic mirror made of glass-fibre reinforced synthetic resin, composed of segments, with relfecting internal surface is fastened to the frame structure in such a way that the segments are fixed by spring screws with washers enabling their adjustability at focusing.

Shape keeping reinforcing ribs applied at the back side of the segments can further increase the mechanical strength of the collector. The sheet bearing the internal reflecting surface is glued to the ribbed back panel.

The ball-and-socket type structure, supporting the collector, consists of the lower bearing part fixed to the foot, with a hemispherical hollow inside, coated by metal-steamed lead, the hollow steel ball which is seated in the lower bearing part, and the bearing part fixed to the lower annular ring of the basket-like upper supporting structure which is fastened to the collector. The steel ball between the two bearing parts is provided with a cover protecting it against dust.

The moving structure of the supporting rods is constructed so that a rack toothed at both sides is connected to the upper part of the telescopic rod, while the lower part of the latter is provided with an electromotor with a gear wheel on its shaft. The gear wheel is joining to the rack fixed to the upper part by means of further gear wheels.

The positioning structure of the supporting rods consists of racks toothed at both sides, joining to the upper part of the telescopic rod, while its bottom part is provided with interlocking forks and an electromagnetic coil releasing the forks. Gear wheels join here at two sides to the rack, while second gear wheels of smaller diameter, with helical toothing serve for their connection. The interlocking forks join to the gear wheels with bevel toothing.

Large size collectors are supported by means of hydraulically driven supporting rods, and there is a main supporting structure at the middle of the collector which is also driven hydraulically.

The receiver of the collector takes approximately the form of a cone with a funnel-like hollow at the bottom. The internal wall of the conic hollow is provided with a heat-resistant coating. In the internal part of the suitably dimensioned receiver, the external wall of which is insulated, there are baffle plates following each other spirally upwards, serving for the gradual and efficient heating of the heat transferring agent.

There is another possible construction of the receiver.

In this case the internal hollow wall of the receiver is made of pipe coils conducted spirally upwards. The heat transferring agent conducted in the pipe coil will be heated up by the focused sun rays.

The pipelines passing the heated heat transferring agent downwards from the receiver of the collector and returning the cooled agent upwards, is conduted through the hole in the centre of the collector, through the basket-like upper bearing part placed under the collector, and through the steel ball supporting the collector. The upper bearing part and the steel ball are positioned fixedly compared to each other. There are further pipe sections - in the ambiency of those leaving the steel ball, angularly, preferably perpendicularly positioned to them - which are connected by means of sections provided with articulated elbows protruding into the pipe sections in sealed condition.

The electric machines and units of the equipment are supplied from a power generating unit consisting of heat-exchanger, turbogenerator and condenser, joining also to the receiver of the collector. An advantageous construction of the heat-exchanger is a boiler drum with heat-insulated wall and provided with safety valve, manometer, water gauge, vapour thermometer and water thermometer. The exchanger is equipped with two pipe sections, the upper one serves as the inlet of the hot heat transferring agent, the lower one as the outlet of the cooled agent. These sections are connected in the internal part of the unit by means of a heating system consisting of linings of different diameter, and pipes connecting the latter.

At the bottom part, a feed water tank joins to the heat-exchanger by means of a pipe, provided with a feed-pump, while the turbogenerator is connected to the pipe for the outlet of the generated high-pressure steam at the upper part. The pipe for the expanded steam leaving the turbogenerator is to be conducted into the condenser, preferably into the sea water pre-heating tank, and the outlet pipe of the condenser is conducted into the feed water tank.

The pipelines of the heating system are equipped with circular sheet type ribs guaranteeing more efficient heat rejection.

An advantageous construction of the first evaporator tank is provided with safety valve, manometer, drop catcher, water gauge and cylindrical heaters concentrically surrounding each other whereto linings are placed at both the top and bottom part, perforated at the side facing the radiator. The upper perforated linings are connected with the inlet pipe by the one passing upwards the hot heat transferring agent, while the lower perforated linings are connected by the outlet pipe of the cooled agent.

There are mixing blades inside the first evaporator tank promoting heat transfer, hindering sedimentation on the heater.

The mixing blades are fixed in pairs, in radial direction, opposite to each other, to the vertical supporting rods fastened to horizontal supporting rod fixed to the shaft placed in the axis of the evaporator tank, fitted with bearings at more points, driven at the upper end by an electromotor.

The second and further evaporator tanks of the unit are provided with heating systems utilizing the condensation heat of the hot steam leaving the previous tank.

These heating systems consist of linings of different diameters and pipes connecting the linings. The outlet of the steam cooled here will pass through the condensate separator to the heat-exchanger where distilled water is further cooled(in the given case this heat-exchanger can be the sea-water pre-heating tank). There is a vacuum pump in the steam outlet pipe producing vacuum in the tank.

The steam outlet pipe of the last evaporator tank, which is also equipped with vacuum pump, is connected to the heating steam outlet pipe after its condensate separating section, and is also conducted into the heat-exchanger serving for further cooling of the distilled water, or into the sea-water pre-heating tank.

The pre-heating tank of the unit holds a suitably dimensioned shell-and-tube type condensation system cooling the distillate arriving from the evaporator tanks, as well as a further shell and tube type condensation system driving the turbogenerator, performing the condensation of the expanded steam.

At the top of the tank there is an electronically controlled feeding pump regulating the pre-heated sea-water supply into the evaporator while the ball journal serving for the deaeration of the tank can be found at the top of the tank.

The sea-water storage tank should be located in the ambiency of the seaside and, should it be required, it is to be placed onto legs. The tank is connected with a sea-water conducting hose and a plunger pump for taking out the sea water, placed under the lowest sea-level, provided with filter cloth.

There is a second shell-and-tube type condensation system in the tank, the inlet pipe of which is leading from the pre-treatment tank to the condensate separator that separates the distillate still containing some steam, while its outlet pipe is conducted into the distilled water storage tank.

The sea-water storage tank is provided with aeration pipe, float and level regulator.

The distilled water storage tank is placed under ground level for further cooling of the water and keeping it at low temperature, and is provided with an aerator unit,a level indicator,a well-pipe and a water take-out unit, preferably a plunger pump.

The attached drawings show the different units of an exampling equipment in a more detailed manner, i.e.:

### Figures:

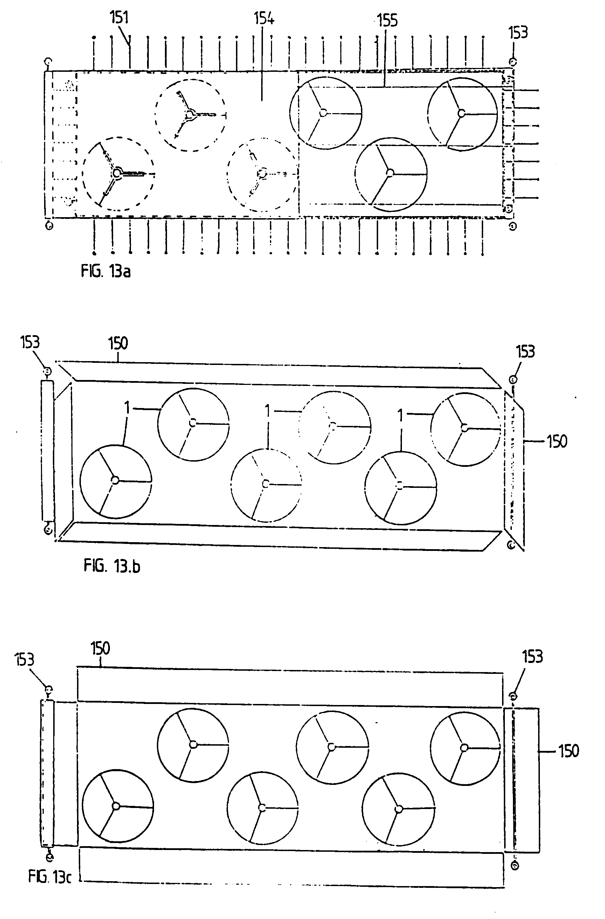

- 1.: Location sketch of the equipment
- 2.a.b.c.: Structural sketch of the solar collector
- 3.a.b.c.d.: Sketch of the collector segments
- 4.a.b.c.d.e.f.g.h.: Connection sketch of the rib elements of the collector
- 5.: Sketch of the heat receiver tanks and the collector supporting structure 5.b.
- 6.a.: Sketch of the receiver tank
- 6.b.: Sketch of the telescopic supporting structure
- 6.c.: Sketch of the elements supporting and moving the collector
- 6.d-e.: Sketch of the structure moving and bracing the collector
- 7.: Sketch of the evaporator tanks connected in line
- 8.: Cross section of the first evaporator tank
- 8.a.: Different designs of the cylindrical heating system of the first evaporator tank
- 9.: Sketch of the power generating unit containing the heat-exchanger, turbogenerator and the condenser.
- 10.: Location sketch of the sea-water storage tank, the pre-heating unit and the distilled water storage tank
- 11.: Sketch of a small size sea-water evaporator with a collector following the direction of the sun
- 12.: Sketch of the small size, portable sea-water evaporator
- 13.: Sketch of the system protecting the collectors against windstorm
- 14.: Sketch showing the structure of the sidewall of the protecting system under Figure 13.
- 15.: Perspective sketch of the protective system (Figure 13.) showing the elements fixing the corners.
- 16.: Drawing of the supporting rods stretching the cover sheet.

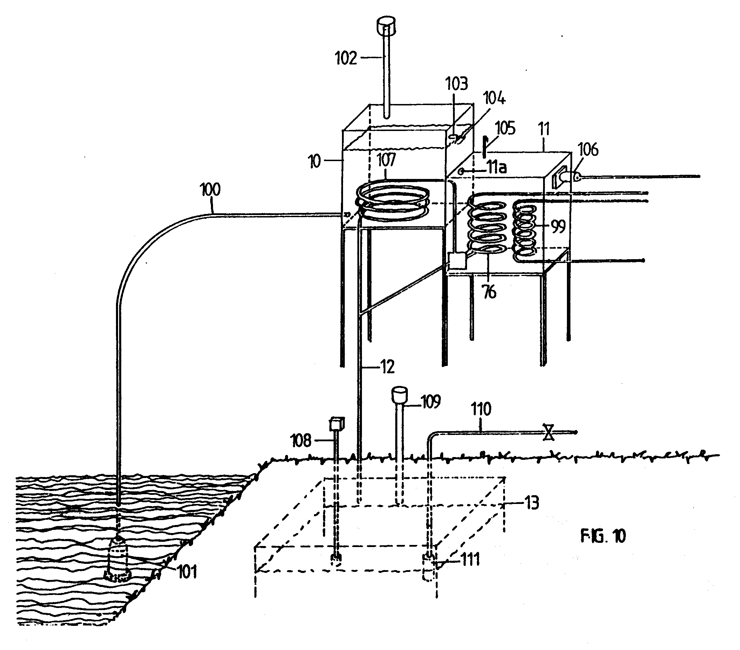

The unit shown in Figure 10.is composed of a pre-heating and vapour condensing tank 11, and a reinforced concrete sea-water collecting and storage tank 10 located in the ambiency of the sea-side, at a height guaranteeing the required gravity-head, or placed onto legs. The sea-water storage 10 tank is completed with the plastic hose 100 taking out sea-water, connected to the tank itself and with the plunger pump 101 provided with filter cloth. The tank 10 is completed also with aerator pipe 102, float 103 and water level regulator 104. The residual vapour originating from distillation will be condensed in the shell-and-tube type condensation system 107 mounted in the storage tank 10. The condensed water gets then down into the distilled water storage tank 13 through an outlet pipe 12.

The pre-heating (vapour condensation) tank 11 is located close to the storage tank 10 built to it, but at a lower level. The two tanks 10 and 11 are connected by a hole or line 11.a through which the pre-heating tank can be continuously filled with sea-water. At the time of the first filling, the tank 11 is deaerated through the ball journal 105 mounted at the top of the tank 11.

The pre-heating tank 11 is provided with a suitably dimensioned shell-and-tube unit 76 serving for the cooling of the high temperature distillate arriving from the evaporators 3, 4 and for the condensation of the steam expanded in the turbogenerator of the power generating unit 96. At the upper part of tank 11 there is an electronically controlled feed pump 106 regulating the feeding of the pre-heated sea water into the evaporators. The outside surface of the pre-heater tank 11 is painted into carbon-black for the sake of the pre-heating of the sea water. It is also possible to design a flow-system sea water storage tank 11 which would increase the efficiency of condensation.

In order to avoid the warming of the water - rather to cool it -,the distilled water storage tak 13 is located underground. Distilled water - condensed in the sea-water storage tank 10 and the pre-heating tank 11 - will arrive here by gravity through an outlet pipe 12. Tank 13 is completed by an aerator 109, a water level indicator 108, a pipeline 110 and a plunger pump 111.

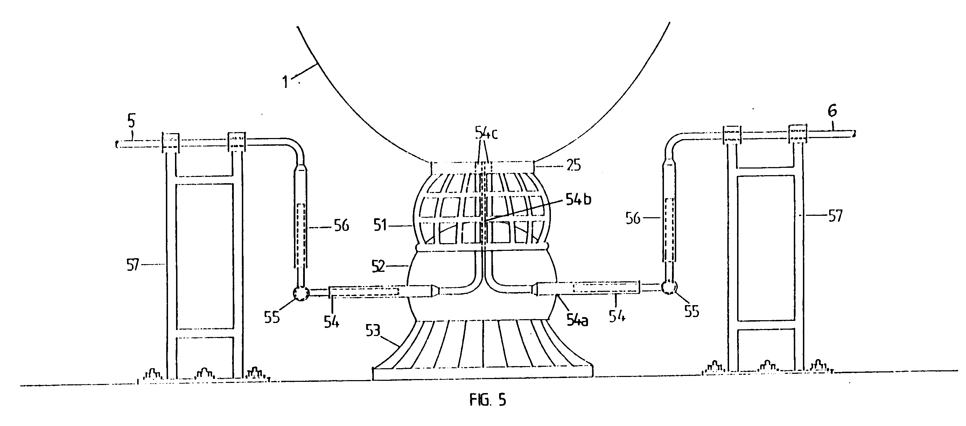

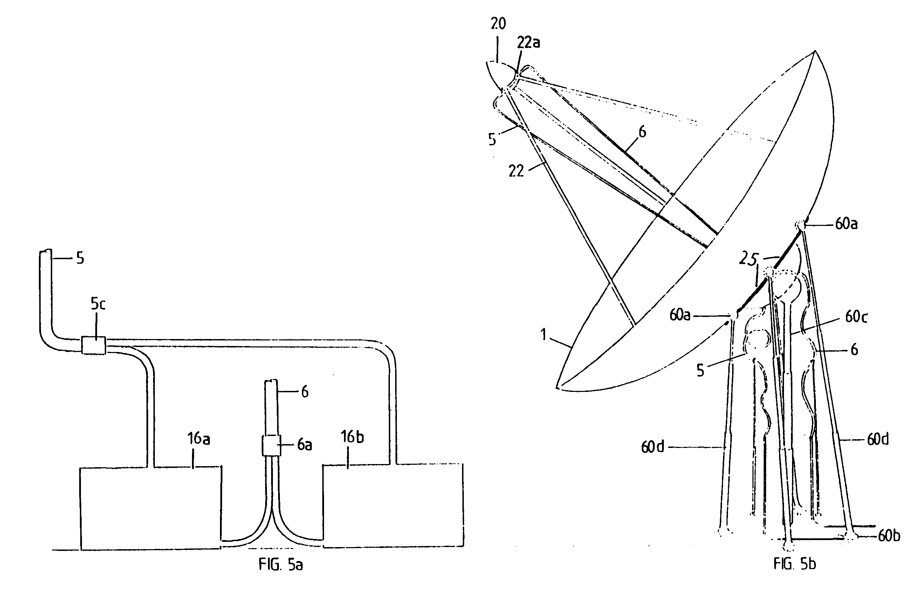

The parabolic collector 1 shown in Figures 5.b and and 6.c. which can be made in two designs, will supply the energy required for the operation of the unit.

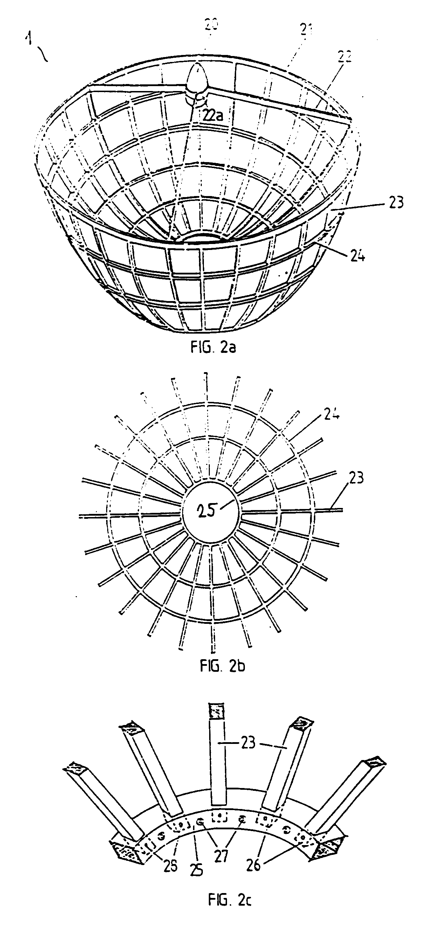

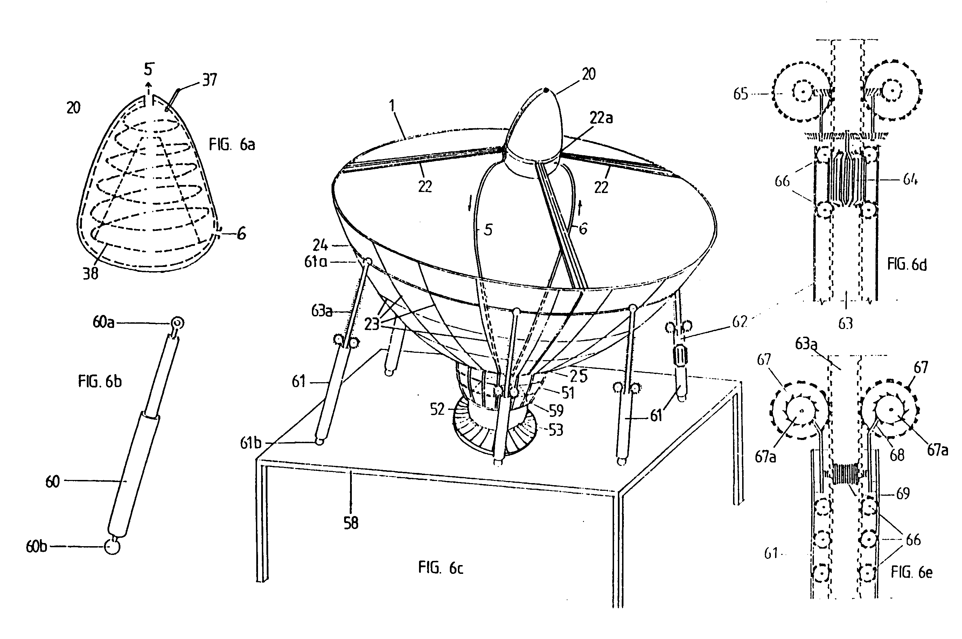

The design shown in Figure 6.c presents itself as a parabolic collector made of aluminium casting with a wall thickness depending on its diameter, braced by longitudinal and transversal reinforcing ribs at the external surface. The reinforcing ribs 23 are cast together with the collector body and end in a ring 25 provided with bores at the narrow part (Figure 2.c.). This ring 25 bears a basket-like, hemispheric upper bearing part 51 - connected by screw joint - consisting of stainless steel ribs and stiffening members, including a hemispheric steel plate at its narrow part (Figure 5).At the lower,narrow part of the "basket" there is a ring fastening the ribs, fixing the hemispheric supporting steel plate that holds the collector 1 carrying steel ball 52 steated therein with its third part (appr). The parabolic collector carrying steel ball 52, covered to be protected against dust, is made of stainless steel, its diameter and wall thickness are dimensioned to the requirements. The steel ball 52 seats with its lower third part in the hemispheric bearing 53 which is coated by metal-steamed lead and is designed in the geometric centre of the carrying structure (58). The ball is turnable in any direction.

This ball-and-socket design guarantees the turning of the collector at any direction, furthermore, this structure is capable of holding the total weight of the collector.

There are several fixing telescopic 60 or supporting 62 rods (Figure 6.) serving for the regulation of the articulated movement, as well as for fixing the collector in the required position and for its continuous moving. At the bottom part the supporting rods are fixed by means of ball-and-socket joints 60.b.,61.b., their upper part with bolts 60.a.

The supporting structure 58 of the collector 1 is oriented so that it bears a pair of supporting rods without electromotor 61 in East and North direction as well as another pair of supporting rods 62 with electromotor 64 in West and South direction.

The small gear wheels 66 in the internal part of the telescope-like part of the supporting rods, between the jacket and the toothed rod, assure the even bearing of the racks 63.

The supporting-moving rods at the East and North side provide for the stability of the collector and enable it to follow the position of the sun. These holding rods are designed so that the toothing of the smaller diameter gear wheels - moving together with the combined double gear wheels 67 connected to the rod-toothing - enable movement in one direction only, thus protecting the collector against accidental displacement in case of a sudden gust of wind.

Hydraulic supporting rods 60 will be used for the fixing of large size parabolic collectors, as well as for moving and keeping them in the required direction.

These rods are connected to the base by means of ball-and-socket joints 60.b at the lower part, while at the top either ball-and-socket joints 60.a or bolts fix them to one of the reinforced rings 25 of the collector. The main hydraulic support 60.c, being in the extension of the axis of the collector, is connected at the top to the hemispheric bearing -designed at the lower part of the collector - by ball-and-socket joint, while its lower end is fixed to the base.

The lifting forks 68 moved by the sucking coil 69 enable the positioning of the collector (Figure 6.c.) in the direction of the early morning sun(Figure 6.e).

At operation the collector 1 is always perpendicular to the direction of sunrays. Computer operated electromotors 64 serve for keeping the direction of the collector as required.

The hydraulic moving structure or the toothed holder provided with gear wheels perform the required motions as controlled by the computer.

There are three supporting structures 22 connected to the holding ring 21 placed at the outside orifice of the collector 1.

As they approximate the center, these structures end in a ring 22.a fixing the tank (solar-boiler) 20 filled with the heat transferring agent. The latter will be passed by means of pipelines 5, 6, leaving the tank 20, conducted downwards at the upper and lower opposite sides of the tank, in approximately vertical position. The cold-side pipeline 6 running upwards is conducted from the collector center 1 through a bore, into the internal part of the tank - at its bottom - which is placed in the focus; the hot-side outlet pipeline 5, leaving the outlet opening at the upper part of the tank, is passed up to the inlet opening of the heater of the first evaporator tank through the bore in the collector center 1.

The suitably dimensioned receiver 20 of cone shape (appr.)with insulation coating at the external mantle, serving as a heat collecting unit receiving the heat transferring agent has a funnel-like hollow at the bottom, and is provided with baffle plates 38 mounted upwards in spiral direction serving for the gradual and efficient heating of the heat transferring agent. It is also possible, as per another design, to apply a bundle of tubes laid in the internal part of the tank in circular position that would circulate the agent.

The wall of the conic hollow in the internal part of the tank is provided with highly heat-resistant metal or ceramic coating.

During operation, the funnel-like hollow of the tank 20 will receive the heat rays collected and focused by the collector 1, and will transfer them - in the form of thermal power - directly and by means of the baffle plates 38 or the bundle of tubes to the heat transferring agent in the tank.

The cold heat transferring agent will be fed through the hole at the bottom of the tank, while the hot agent is to be taken out at the top of the same, by means of an electromagnet valve 37 or a thermostat opening at the determined temperature. The tank 20 is provided also with manometer and thermometer.

The oil type "Therminàl 60" is most practicable to be used as heat transferring agent, considering its flash point being at 319°C. In case of higher temperature, in order to increase efficiency, liquid sodium generally used at solar plants as heat transferring agent is better to be applied for this purpose.

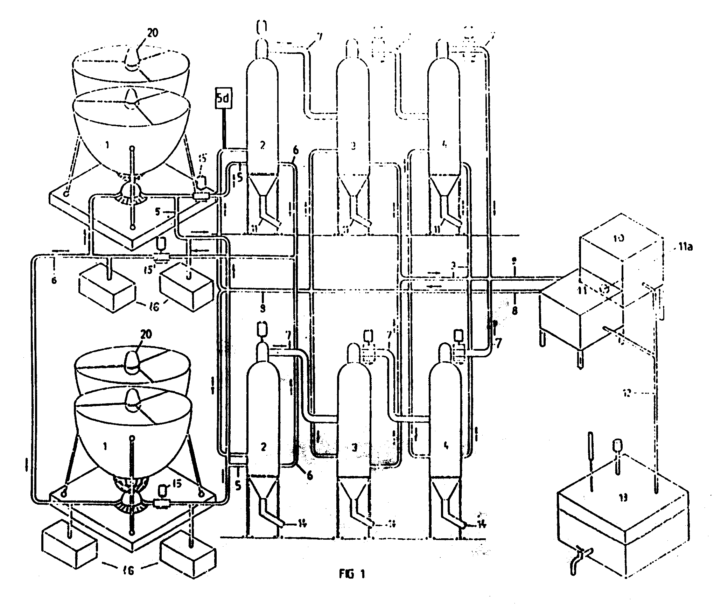

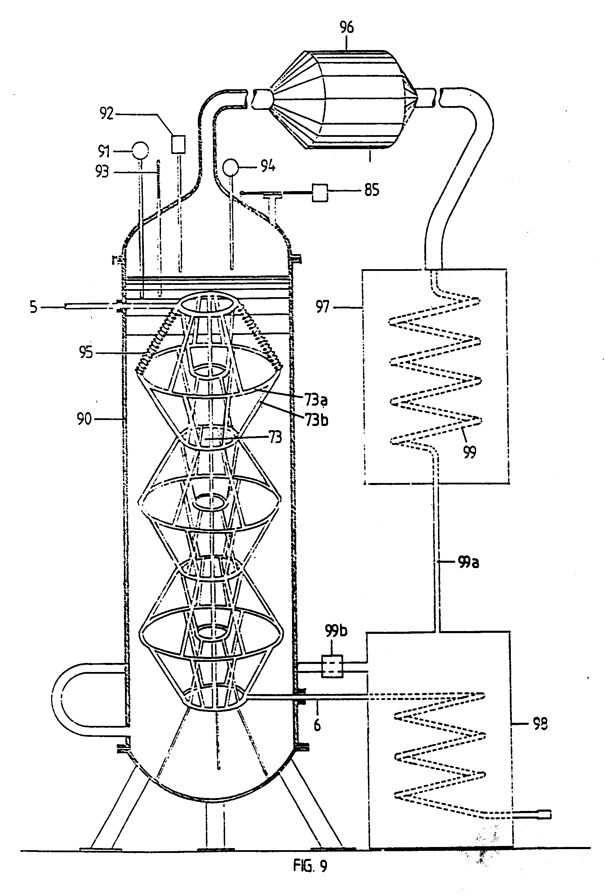

The hot heat transferring agent heated in the tank 20, conducted by a pipeline 5 gets into the upper bearing part 51 through a bore 54.c at the collector center, then it is passed into the steel ball 52 - holding the collector - through another bore 54.b (Figure 5.). At the horizontally determined central, southern part of the external mantle of the steel ball 52, the pipeline passing the hot agent gets into the open air through a bore 54.a, and is continued in a double-wall, suitably fixed 57 pipeline 5 provided with articulated joint 55 operating like a telescope, gets to the first evaporator with cylindrical heater (Figure 1.) and to the heat exchanger 90 resp. (Figure 9.). The pipeline 6 of the cold heat transferring agent is conducted upwards, in parallel to the above, in northern direction. In case telescopic movement is applied, the material is passed by means of flexible pipes.

The unit is completed with a heat storage system (Figure 5) to be applied in case of temporary clouding and in case the daily working time is to be extended. This system consists of the two or more suitably insulated heat-energy storing tanks 16 of the required volume, pumps and heat-insulated pipelines 5, 6 (Figure 1.).

The the noon hours, when the solar irradiation is the strongest, the heat transferring agent heated in the receiver 20 is to be conducted from the collector and passed towards the cylindrical heater of the first evaporator tank 2 /in case of the power generating unit:towards the heat-exchanger/; part of the agent is tapped by opening an electromagnetic valve 5.c. mounted on the primary line 5, and gets through a pipeline into the empty tank 16.a where it is collected.

Simultaneously, a pump 15 passes the cooled agent from another totally filled up tank 16.b (connected to the secondary line) toward the receiver by opening an electromagnetic valve 6.a. This fillitg/emptying proces is continued until the originally empty tank 16.a is completely filled with hot heat transferring agent.

In case of temporary clouding, as well as in the evening when there is no sunshine, the above described process is performed in reverse sequence.

At the end of the working time, when desalinizing (power generation) is terminated, - in case of units using liquid sodium, the pumps discharge the heat transferring agent from the total system into the empty tank, wherefrom the system will be refilled the next morning, before the operation is started.

According to another possible construction (Figure 5.b.), the parabolic collector 1 can be moved so, that a hydraulic support 60.c clamped by fixed joint at the bottom bears the collector 1 at its axial line, where a ball-and-socket joint guarantees free turning. In this case moving is performed by hydraulically operated, telescopic rods 60.d connected at at the bottom to the base, and at the top of the lowest reinforced ring of the collector 1 by ball-and-socket joint. 60.a, 60.b. A computer is applied to synchronize and control these rods.

The lines 5 and 6 passing the cold and hot agent leave the collector at its bottom part and continue in a flexible, then in a fixed pipe.

The internal, reflecting surface of the collector is coated by metal-steamed aluminium to increase reflecting efficiency. In order to increase corrosion-protection and reflecting capacity, this surface is coated by a pair of dielectric films.MgF₂ and CeO₂ are the best pair for this purpose.

Ceric oxide forms an extremely hard film and increases the reflection capacity of the aluminium ensuring, at the same time, an absolute safe protection of the same against oxidation.

The glass-texture reinforced, synthetic resin frame structure of the parabolic collector 1 is shown by Figures: 2., 3. and 4. The frame structure is designed to take the form of a parabolic solid of rotation, where the ovally bent "vertical" ribs 23 are connected by horizontal circular rings (Figure 2).

The top ring 21 and the lowest reinforced one 25 fix the "vertical" ribs 23 by pins 26. The pinned structural elements, designed with great accuracy, guarantee accurate assembly and the forming of the correct shape. Glue injected through bores 28 will strongly adhere the pinned surfaces to each other.

The bottom jointing of the frame structure is shown in Figure 2.c. The collector 1 is connected to the basket-like upper bearing part 51 (Figure 5.) by means of threaded bolts through bores 27 made in the lowest reinforced ring 25.

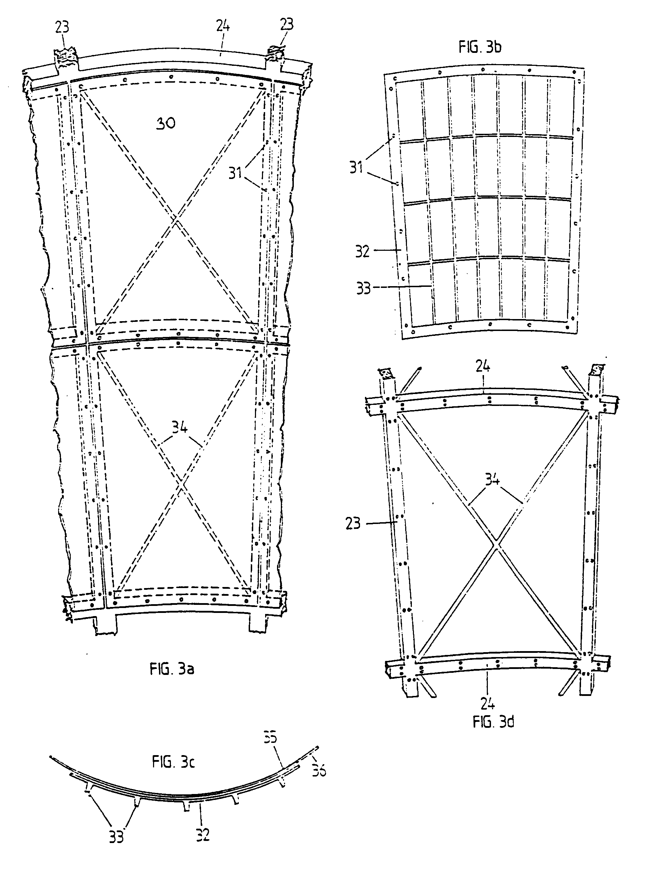

The construction and structure of the module segments 30 as well as their fastening are shown by Figure 3.

The total internal surface of the parabolic collector is coated by synthetic resin segments 30 reinforced by multi-layer glass-texture; the segments 30, made of elements processed at the internal 35 and external 32 surface, are glued to each other. Having been glued, the internal sides of the segments will get a reflecting surface as described above.

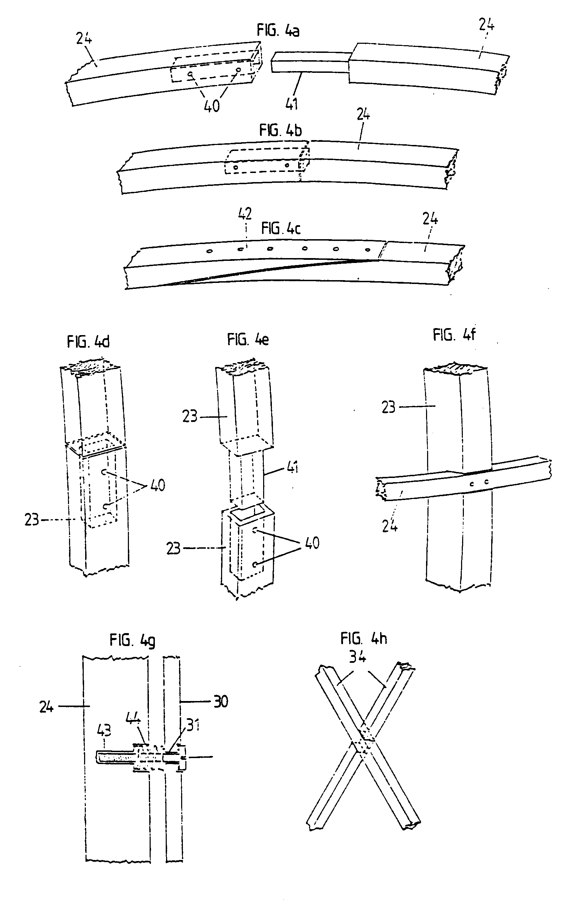

The back side of the segments is provided with fastening ribs 33 serving for keeping their form. The internal surface 35 is bigger than the external one 32 at each side, and there is a protracting part 36 guaranteeing the correct bearing of the segments 30. Spring screws with washers fix them (Figure 4.g.).

Though accurate processing will result in an even internal surface and will provide for the required directional angle, still it is possible that we meet with manufacturing shortages or inaccuracy in fitting.

These defects can be eliminated by the utilization of spring screws 44 for the accurate fitting of the segments 30 which are to be applied into bores 31 made in the bearing edges of the segments contacting the supporting structure as well as in bores 43 made at the corresponding points of the supporting structure. Cross pieces 34 will strengthen the frame structure to be fixed by pin joint.

Figure 4. shows the joint fitting system of the supporting structure. The ribs 23 and the rings 24 are connected by similar pin joints. Surfaces embedded into each other will be fixed by glue injected through bores 40. Connection of the ribs 23, rings 24 and cross pieces 34 is performed by pin joint 40 and glue.

The rings 24 with split end 42 are fixed at the overlapped surface by means of screws and glue.

The large parabolic collector of light plastic structure, made of modules is, apart from being of a high-capacity unit due to its increased surface, less expensive owing to the cheap structures and moving unit elements in its construction, and can be simply and quickly assembled at the same time.

The evaporators with a volume dimensioned according to the diameter and the capacity of the collector, serve for the production of desalinized water. Beyond the potable water being the primary product, the by-products are important industrial raw materials too.

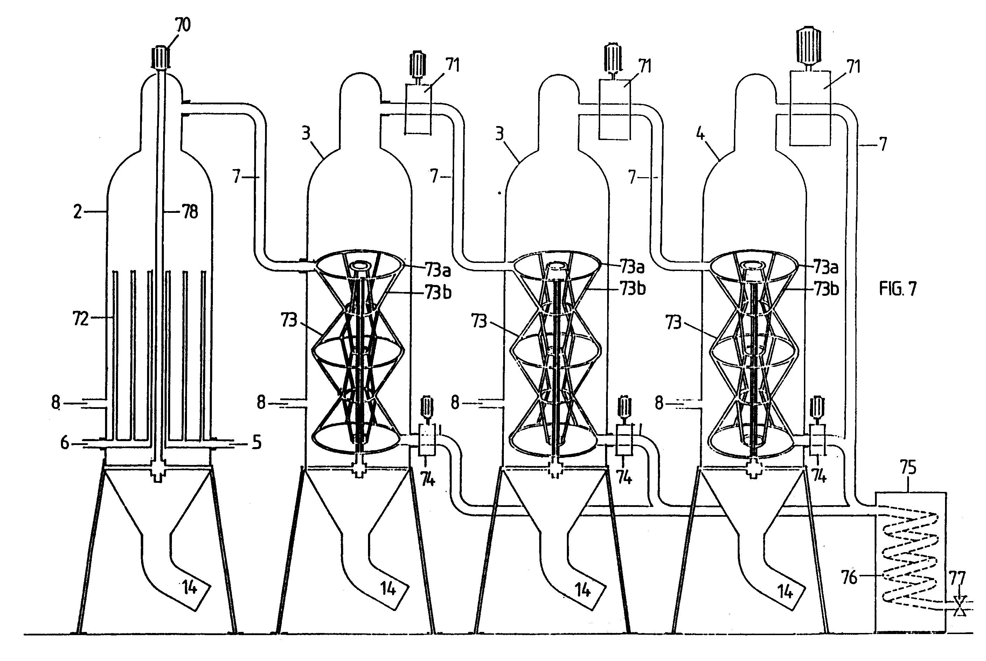

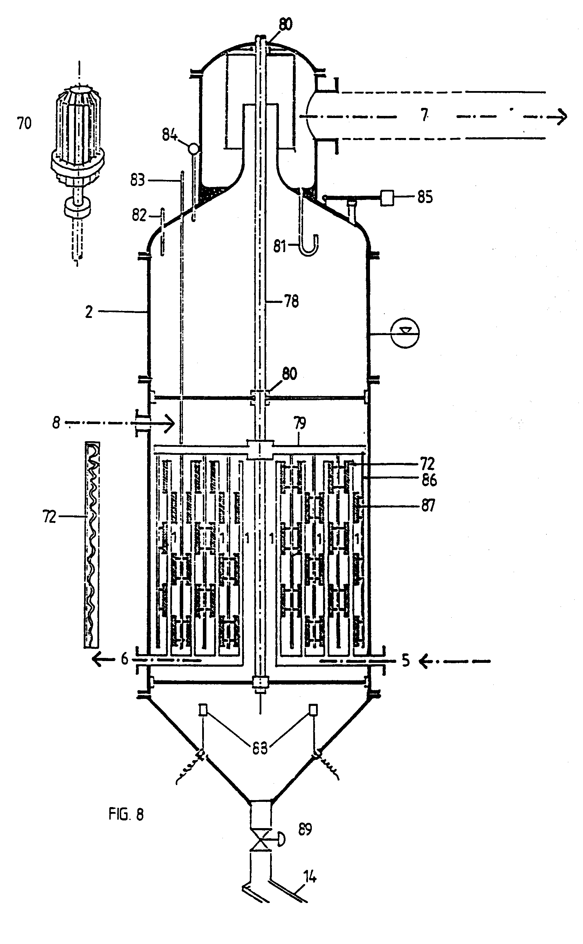

The application of multi-effect evaporators increases the rentability and efficiency of operation. Figure 7. shows the most practicable connection of the evaporators.

The unit is heated by means of the principle according to which the vapour produced in the first evaporator tank 2 is conducted into the heating system of the subsequent second one, while the vapour of the latter is conducted on in the third one, etc. The tanks are provided with a specially designed 73a, 73b heating pipe system. At the outlet of the heaters 73 condensate separators 74 are applied, so that only condensate will leave the unit. The condensate produced in the last evaporator tank 4 is passed by a pipeline 9 into the pre-heater 11 and the salt-water storage tank 10 (Figure 10).

It is practicable to produce vacuum in the second and the subsequent evaporator tanks, thus the boiling point of the solution to be evaporated will become lower and lower.

Vacuum is to be increased gradually starting from the second evaporator tank 3 towards the last one. A condensate separator 74 will remove the condensate of vapours below atmospheric pressure. The obtained distilled water will be passed into the distilled water storage tank 13 (Figure 10).

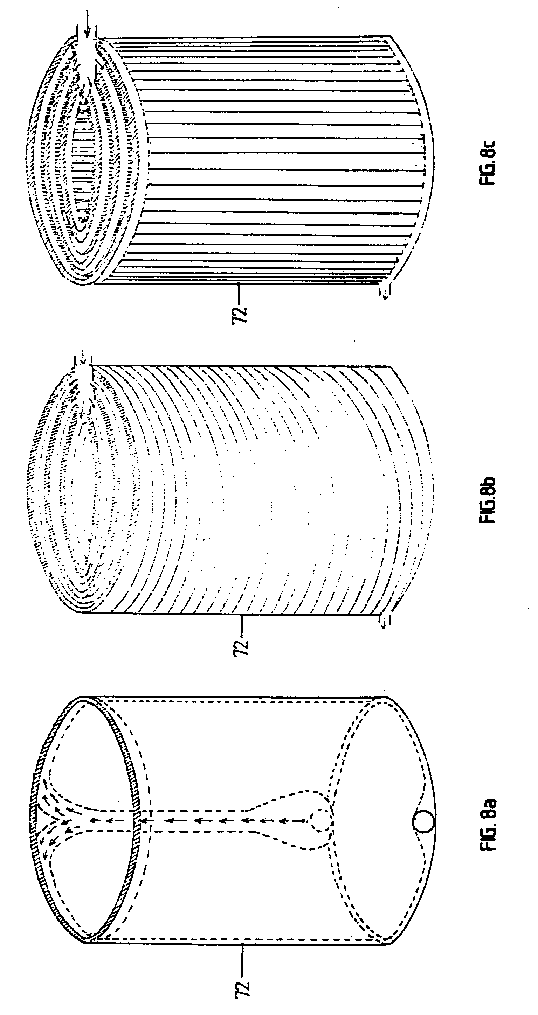

In the first evaporator tank 2, it is practicable to use a liquid agent - instead of hot steam - for heat transfer through the cylindrical heaters (Figure 8.).

The hot heat tansferring agent should be introduced into the heating pipes at the bottom of the cylindrical heater 72 so that a vertical conduction pipe at the inlet side passes the material up to the top point of the heater 72, where a perforated pipe running around the unit spreads it. Then the hot agent streaming downwards through the ribs inside the heater transfers its thermal energy (Figure 8.a.).

At the side opposite to the inlet, the cooled agent with decreased thermal energy, leaves the evaporator 2 and passes towards the receiving tanks 20 in the collector 1.

In another construction it is also possible to use the evaporator without a mixer; in this case a spiral pipe coil going from top to bottom represents the heater (Figure 8.b.).

Having been fed at the top of the cylindrical heater the hot heat transferring agent passes from the inlet pipe downwards through the spiral pipe while it transmits its thermal energy. Then, having been collected in the storage pike at the bottom part of the shell tube - at the opposite side -, it leaves the evaporator 2 by means of the outlet pipe and is passed towards the receiving tanks 20 in the collectors 1. In the heater a pump provides for the required flow speed of the agent.

There is a third design, in case of which the evaporator has no mixer either, and the heaters consists of more, cylindrical, vertical bundles of tubes (Figure 8.c.), where the top ends of the pipes of the bundle arranged in cylindrical form, join in a horizontally running pipe ring with perforated wall at its lower part. An inlet pipe joins to the horizontal pipe rings.

The lower ends of the pipes forming the cylindrical bundle of tubes also join in a horizontally running pipe ring, having bores on its upper wall, connecting to the outlet pipe.

The pre-heated salt water is to be fed at the part under the cylindrical heaters in the evaporator 2.

The funnel-like part of the evaporator is provided with a gauge indicating the min. and max. values of liquid concentration 88. This gauge is in direct contact with the computer giving signals thereto.

The following structural elements are used for the continuous removal of the concentrated brine during operation.

The continuouos removal of the concentrated brine produced during operation is performed by means of an adjustable valve 39 as follows: as soon as the brine concentration in the lower, funnel-like part of the evaporator reaches the critical value, the control system, on basis of the signal of the concentration gauge 88, opens the valve 89 at the outlet on the lower part of the tank and keeps it open until the gauge 88 shows the min. value and gives signal, the control system closes the valve 89 then.

The evaporator tank is equipped with a water level gauge 83 indicating the level of the water in the evaporator and giving signals to the computer thereon.

Thus, it is possible to measure the quantity of salt water in the evaporator, on basis of which the operation of the salt water feed pump 106 can be controlled (Figure 10). Evaluating the difference between the value indicated by the water level gauge 83 and the prescribed value, the computer will continuously calculate and control the feeding of sea water into the evaporator.

Heat insulation applied to the evaporator wall will reduce thermal loss.

A manometer 84 and a safety valve 85 contribute to safe operation of the evaporator.

At the top of the evaporator shaft, above the evaporator tank, at its external part, there is an electro-motor 70 driving the mixer blades 87. This motor drives the rods 86 holding the cleaning blades fixed onto the supporting structure by means of the rotation of the shaft 80 provided with bearing at more points.

The symmetrically positioned blades 87 are capable of removing the settled salt from the total surface of the cylindrical heater.

The evaporator is provided with drop catcher 81, water level gauge 83 and water thermometer 82.

The outlet of the concentrated brine by means of discharge pumps or evacuated tanks, the feeding of salt water, the construction of the supporting legs and the instrumentation for safety and other purposes are similar in case of the other evaporator tanks, too.

The thermal energy collected in the concentrating and receiving parts of the equipment subject of the patent application (parabolic collector and its accessories) can be used alternatively too:i.e. in parallel with or instead of sea water desalinizing: for power generation. The units required for power generation are shown in Figure 9.

The heat-exchanger 90 presents itself as a boiler with heat-insulated wall, with a volume, pressure and wall thickness suitable for the electric power requirements of all the electric consumers of the desalinizing process. It utilizes a part of the thermal energy received by the tanks 20 located in the focus of the parabolic collectors 1. The hot heat transferring agent will be introduced into its heating area at the top of the unit through a pipe-line 5, while the cooled agent will be discharged at the bottom through another pipeline 6.

The heating pipes 73 of special form, arranged at appr.45° angle, connecting the 73a horizontal circular rings in the heat-exchanger 90 provide for turbulent flow and favourable heat rejection.

In case of power generation, the steam heated up to the required temperature, leaves the heat-exchanger 90 and operates a turbogenerator of the required size 96. Then the exhaust-steam is conducted into a condenser 97 with external water cooling, where the water obtained after the condensation of vapour in the great-surface bundle of tubes or the spiral pipe coil 99 is pumped into the feed water tank 98. Water cooled by sea-water or other desalinized water should be used for the continuous cooling of the condenser 97. The built-in safety valve 85, the manometer 94, the water level gauge 93, the vapour thermometer 92 and the water thermometer 91 guarantee the safe operation of the heat-exchanger.

There is another construction where the receiving tanks 20 in the focus of the parabolic collectors 1 are designed to serve as heat-exchangers 90.

In this case liquid sodium or water should be used as cooling medium.

In yet another construction it is also possible to apply the unit is of the Brayton cycle in the receiver 20 of the collector as power generating equipment.

In this case air will be used for cooling: the preheated air is compressed, then heated up to appr. 1000°C, it is expanded in the turbogenerator.

Part of the expanded hot air is conducted into the pre-heater where the incoming air is pre-heated.

The total system (Figure 1.) will be controlled by a computer.

Before commissioning the units of the equipment, all required data should be input. The computer will continuously display the signals required for starting and operation, will continuously measure, in the mean-time, the values received from the instruments, comparing them to the input program, thus performing the automatic control of the complete plant.

The pipeline 5 conducting the hot heat transferring agent is provided with pumps 15 in the required number. The revolution number of the multi-stage electromotor driving the pumps 15 offers a sufficient flexibility of operation. The revolution number, as well as switching in/out will be controlled by the computer.

There is an expansion tank 5.d. installed in the pipeline of the heat transferring agent for volume compensation (Figure 1.).

A battery plant provides for continuous power supply of the unit. The above described generator will serve for its continuous recharging.

The total pipe system of the solar energy utilizing plant will be made of heat insulated, corrosion-resistant metal alloy of the required strength.

The operation of the plan is begun by the filling of the storage tank 10 and the pre-heating tank 11 by means of the plunger pump 101 provided with pre-coat filter, placed in the sea water (deeper than the level of ebb-tide), which starts to work on the instruction of the central control. (The pre-heating tank should be deaerated in case of the first filling). As soon as the equipment operates continuously, salt water is continuously refilled into the storage tank 10.

According to the program, early in the morning - if liquid sodium is used as heat transferring agent -, liquid sodium (discharged the preceding day) will be pumped from the heat-storage tank into the receiving tank, the pipeline- and heating system. The collectors are then positioned to be perpendicular to the sun.

This is performed as follows: on basis of the operation of the sucking coil, the forks - regulating a one-direction movement, fixed onto the guiding-fixing-telescopic rods placed at the eastern side - will be released so as not to get into contact with the toothing of the gear wheels of the smaller diameter.

Then, the control system will actuate the multi-stage electromotors - suitable for slow and rapid movement, placed on rods at the western side -, while the gear wheels will be driven at a rapid revolution number and - since the length of the rods will be extended -, the collector will be turned in the eastern direction.

Simultaneously with the above process, the regulating forks on the easter rods (since they will shorten due to the telescopic motion to a length controlled simultaneously with the above) will return to their original position and will contact again the toothing of the smaller diameter gear wheels.

For this positioning the computer memory gives the data concerning the exact direction of sunrise as per the given calendar date, then compares them with those obtained from the light-diodes placed on the collectors, and corrects the program, should it be required. The sun following motion (North-South direction) is continuously performed too according to the computer program.

Until the end of the daily program or the operation, the computer continuously controls the direction of the collectors to be perpendicular to the sun.

In case of temporary clouding, the computer follows the program characteristic of the given hour of the day. As soon as clouding is over, the computer controls again the perpendicular direction on basis of the data obtained from the light-diodes. Should it be required, it performs correction.

In case of operating trouble, on the immediate signals of the computer, the collectors will be turned away from the direction of the sun, and they will remain in this position until the trouble is eliminated. Then the collectors will be directed again toward the sun, as determined by the program on basis of the given hour of the day.

Simultaneously with the adjustment of the collectors in the morning, the control system starts to operate the feed pump mounted onto the pre-heating tank, as a result of which the evaporators will be filled with salt water up to the required level.

The solar rays received and focused by the collector will heat up the heat transferring agent in the tank fixed in the focus.

As soon as the temperature of the agent reaches the value detemined in the program, the electromagnetic valve or thermostat placed at the upper part of the tank opens the outlet hole giving way for the hot agent. The control system starts then the heat transferring agent forwarding pumps 15 which can be operated at several stages. The pumps 15 begin to operate at a low flowing velocity which will be increased as the temperature of the material will be higher during operation. At the noon hours, when the temperature is the highest, and heat storage tanks are filled up, the pumps work so quickly that the temperature of the heat transferring agent should not exceed the programmed critical value.

The pumps pass the hot heat transferring agent into the cylindrical heater 72 of the first evaporator 2, where - having passed through the vertical pipe starting from the inlet -, it will spread from the perforated ring running around the upper internal part of the heater 72, and flowing downwards on the ribs, it will leave the same at the opposite side after it has rejected its heat energy (Figure 8 and 8.a.).

If a spiral pipe coil is used, the material, introduced at the top of the coil, flowing downwards by forced circulation, contacts a large surface and thus rejects its thermal energy.

If a cylindrical bundle of tubes is used as heater, the heat-transmission, inlet/outlet of the heating agent will be performed similarly. The cooled agent will be pumped 15 from the central pipeline into the tanks 20 in the collector focus 1. The closed primary thermal cycle for power transmission is performed this way.

Due to heating up, the salt water heated in the evaporator 2 will boil at the programmed, high temperature, and will be converted into steam. The over-heated steam - due to the high boiling point and the intensive heating -, passing through the vapour collector provided with drop catcher 81 (Figure 8.) gets into the specially designed heating system 73 of the subsequent evaporator tank, where - having rejected its thermal energy - it heats up and evaporates the salt water in the evaporator.

Following the above process, the cooled vapour with reduced thermal energy -, by meas of the condensate separator 74 - leaving the evaporators, gets into the pre-heating tank 11, then into the distilled water storage tank 13. The vapour leaving the last evaporator tank 4 through a pipe is cooled in the bundle of tubes or in the pipe coil of the pre-heater, then in those of vapour condensing tank.

Finally, it is collected in the distilled water storage tank 13 through the outlet pipes.

In case of multiple-effect evaporators, in the second evaporator tank as well as in those following it, vacuum should be produced which is gradually increasing, while the boiling temperature of the salt water to be evaporated will be reduced.

The continuous re-filling and feeding, resp. of the evaporators with salt water will be performed by the computer (control system) by means of the operation of the feed pump 106 mounted onto the sea water outlet pipe of the pre-heating tank 11. The computer will determine the parameters for the continuous re-filling of the evaporators on basis of the signals of the level gauges 83 mounted in the evaporator tanks.

The continuous removal of the concentrated brine will be performed as follows: the concentration gauge 88 at the bottom, funnel-like part of the evaporators, as soon as the preliminarily determined value of brine concentration as per the program is reached (maximum concentration), gives signals to the computer. The discharge valve 77 controlled by the computer will open, and will remain open continuously until the brine concentration reaches the min. value according to the gauge. In the latter case the control system closes the valve.

A battery plant provides for the continuous power supply of the complete water desalinizing system. An electric power generating unit connected into the thermal cycle will supply the battery plant, as required.

The distilled water, taken out from the distilled water storage tank by a plunger pump, can be converted into potable water in a mixer vessel by means of additives available in unit packages (salts and trace elements). The majority of water - in the form of distilled water - can be used for industrial and agricultural purposes(irrigation, cleaning, washing,etc.).

The water desalinizing equipment, subject of the invention, is capable of providing for its own electric power requirement by means of the power generating unit pertaining to it.

In order to meet the above requirement, a heat-exchanger 90 and a turbogenerator 96 are used (Figure 9.). Part of the heat transferring agent heated up in the tanks 20 installed in the focus of the parabolic collectors 1 is conducted into a heat-insulated heat-exchanger 90 which is suitably designed and dimensioned according to the capacity and pressure as required for the electric supply of the equipment. The hot agent flowing through the heating pipe system of the heat-exchanger 90 (provided with specially designed plate ribs, or without the same) evaporates the water in the heat-exchanger. From the heat-exchanger, the overheated, high-pressure steam is passed through a suitably dimensioned turbogenerator of the required capacity 96, where the generating unit driven by the turbine will produce the required electric power.

The exhaust steam with decreased thermal energy, leaving the turbogenerator 96, will be condensed in the pipe coil 99 of a condenser 97 of the required dimension, connected into the cooling cycle - preferable the pipe coil of the sea water pre-heating tank -, or in a Heller-Forgo type cooling tower, and the water is to be conducted into the feed water tank 98. Herefrom, the feed pump controlled by the computer will continuously feed the condensate water in the required quantity into the heat-exchanger 90.

Part of the exhaust steam expanded in the turbine and leaving the same, passing through the pipe coil of the feed water tank 98 will increase the temperature of the feed water, as required.

The computer with the pertaining control system will control and monitor the operation of the equipment according to the program. Power supply of the equipment for startaing and operation will be provided for by the battery plant.

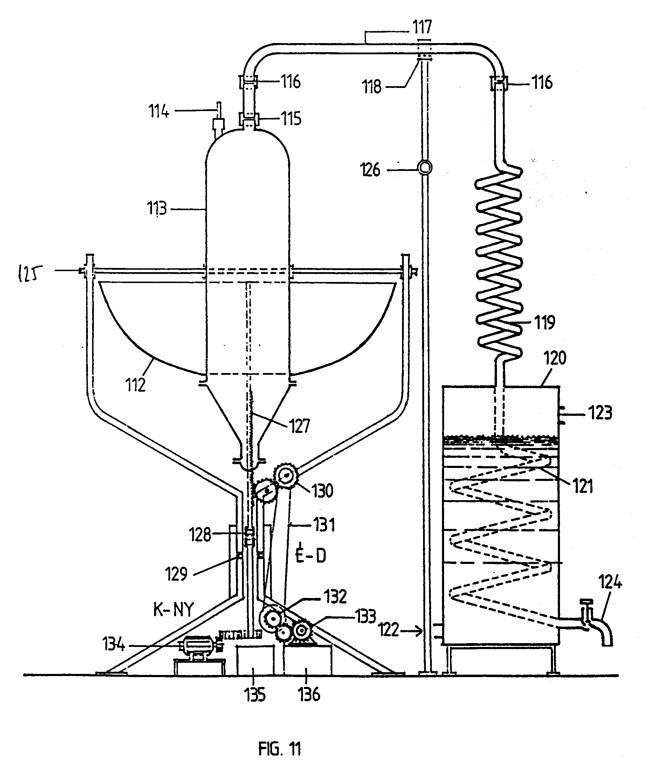

Figure 11. shows a portable equipment which can be easily installed, disassembled and transported even by one person. In this construction the collector 112 and the evaporataor tank 113 provided with a safety valve 114 are fixed to each other.

The evaporator tank 113 is joined 115 to a fixed pipe section, and is connected by a further joint 116 to the flexible pipeline composed of a straight section 117 and a spiral pipe 119. The multi-part pipeline for vapour outlet is conducted into the condenser 120, where it is continued in a pipe coil 121. Potable water can be taken by means of a cock 124 mounted at the end of the pipe coil 121 coming from the condenser. The flow-system of the condenser 120 increases the efficiency of cooling, i.e.cooling water is continuously routed into the condenser 120 through the inlet nozzle 112, and the warmed cooling water is discharged by means of the outlet nozzle 123. In this case the collector 112 is mounted onto a supporting stand 125, which enables the turning of the collector 112 around its horizontal and vertical axis. Turning around the vertical axis (N-S) is performed by an electromotor 133 provided with gear wheel by means of a gear wheel 132, a belt-driven 131 gear wheel 130 and a toothed rack 127 connecting to the electromotor. Turning around the horizontal axis (E-W) is also performed by an electromotor 134 as made possible by bearings 128 and 129.

There is control unit 136 actuating the driving-133 and electromotors 134 to enable the sun-following motion. A battery plant 135 supplied by solar cells or an aggregate continuously supplies the unit with electric power.

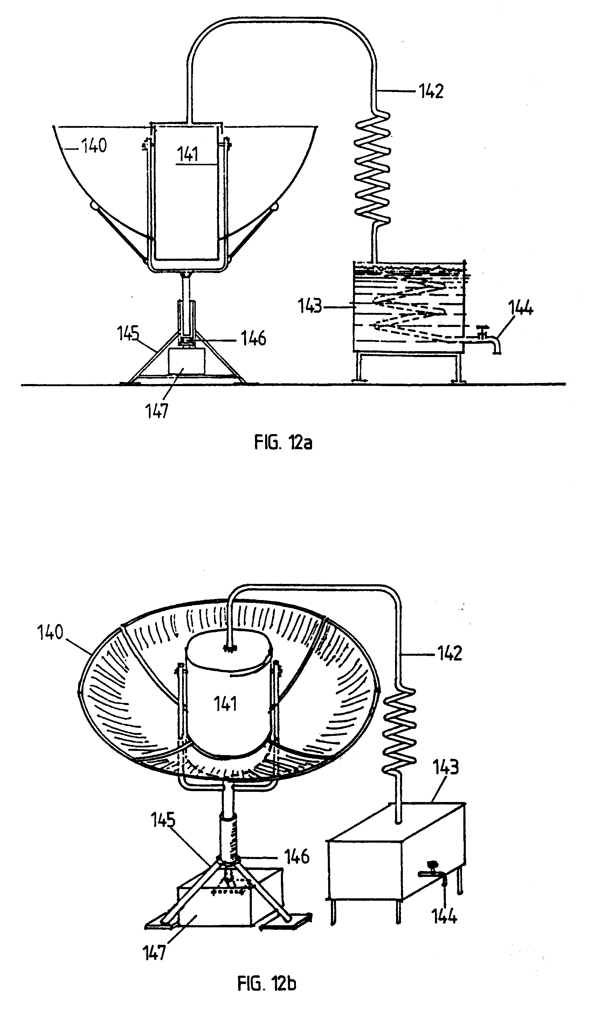

Figure 12. shows a construction meeting very low requirements, and as far as its dimensions are concerned it can be placed in collapsible condition into the luggage rack of a car. In this case the collector 140 is joined in articulated manner to the heat receiving evaporator tank 141 and is mounted onto a stand 145.

During transport the size of the collector 140 can be decreased, since it is composed of more (in the Figure: four) foldable segments. The receiver tank with unscrewable lid 141 is equipped with a vapour outlet pipe 142 at top which is passed through a small cooling tank 143, and is provided with a cock 144 at the end leaving the cooling tank 143 for taking potable water. The collector 140 can be adjusted according to the N-S direction by hand, turned around the horizontal axis.

A clockwork drive 147 will perform rotation around the vertical axis conducted through the bearing 146.

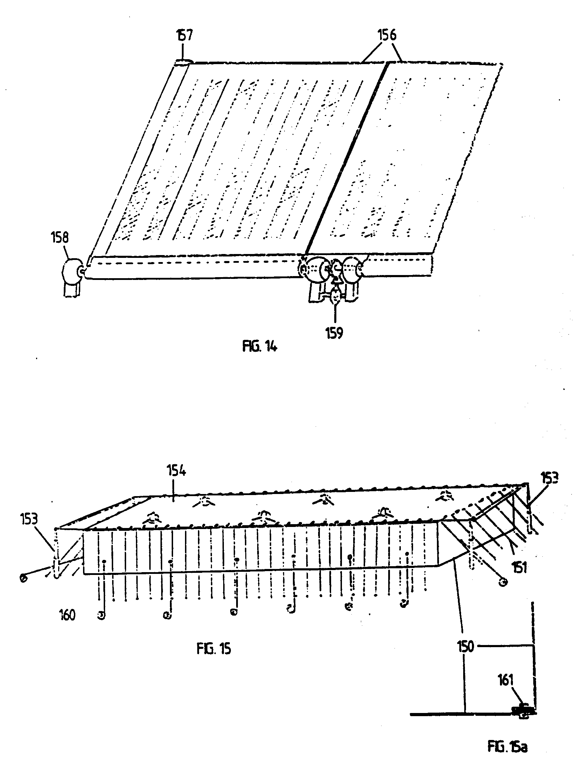

The collectors 1 are protected against wind- and sandstorm by a movable structure (Figure 13.) having four side walls 150 and a cover 154 stretched over them. There is a circular cutting in the canvas exactly fitting to the receiver representing the highest point of the collector 1 (Figure 15.). The side walls 150 of the protecting structure are composed of ribbed segments 156 connected to each other by means of guide rails 157 (Figure 14); each of the segments end, at the bottom, in a shaft turnable in a bearing 158 and is connected to an electromotor 159. Ropes are applied to the external sides of the walls fixed at their upper and middle parts, hindering the inward motion of the walls deviating from the vertical direction. Vertical positioning of the side walls will be performed by an electromotor 159 and ropes 155 fixed to the upper part of the inner side and wound onto winches at the opposite sides. Electromagnetic fixing coils 161 (Figure 15.a.) fix the side walls 150 at their top and bottom ends, similarly to the case of the perpendicular walls.

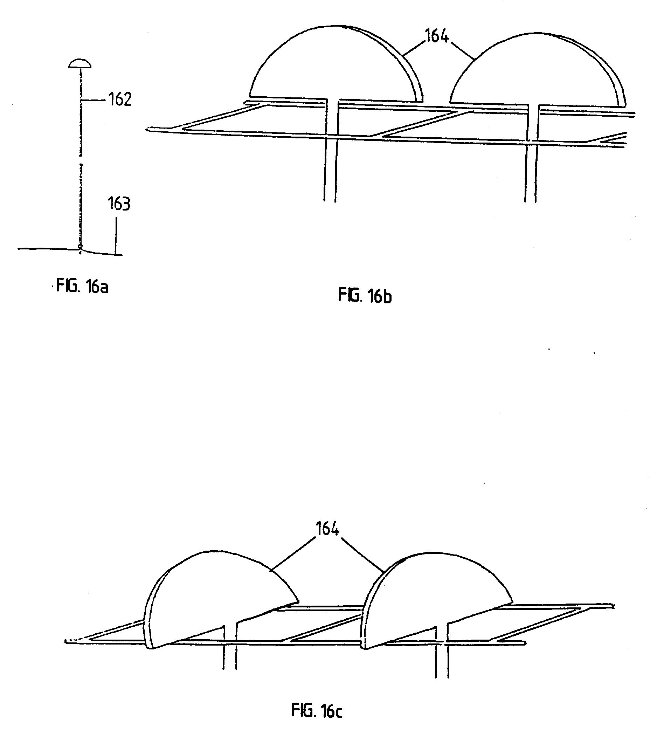

The side walls bear turnable fixing rods 162 perpendicular to their longitudinal direction, connected to each other by a rotating rope 163. The fixing rods 162 end in semicircular flat head 164 at top (Figure 16.). This construction enables the heads 164 of the fixing rods 162 to reeve through the slots made in the covering canvas 154 that covers the sidewalls from top. As soon as the canvas is spread out in its total length, the magnet sucking coils at the sidewall ends will turn the fixing rods 162 at the right angle by moving the rotating ropes 163, as a result of which the heads 164 of the fixing rods 162 fix the stretched canvas. There is a hydraulic supporting rod 153 provided with an electromotor and a stretcher at one of the extreme points of the longer side of the area to be protected; wihle the opposite side is provided with a winch-shaft supporting hydraulic rod 153 equipped with a stretcher fixing the ropes 155.

The sea water desalinizing plant, utilizing solar energy - subject of the invention - offers the following advantages:
The power source of the plant is solar energy which is available in unlimited quantity, at no cost.
The manufacturing and investment costs will be covered many times over since no expensive fuels are required for the operation contrary to the traditional equipment.
The plant will not pollute the environment and will not make even noise.
It can excellently serve smaller or scattering habitations, hotels, lonely cottages, rest-homes, farms. It can be used for irrigation purposes, too.
The equipment can be located anywhere in the ambiency of the sea-side or an artesian well, independently of any traditional power source.
Its operation is totally automatized, and needs no permanent supervision. Compared to the plant operating flat collectors, this one is far more efficient due to its sunshine concentrating capacity of sun-following motion.
Also, is can be operated solely as a power generating unit far away from the roads and the electric network, offering inexpensive power source the investment costs of which will be recovered quickly.
The production cost of the plant is favourable. Should it be required, it is also possible to manufacture a plant of a reduced size.
If used as a sea-water desalinizing unit, no water pre-treatment will be required, which means a considerable cost reduction.
During the sea water desalinizing process crystallized salts and other mineral products can be obtained which are important raw materials for the industry.

## Claims

1. Equipment for desalination of sea water by the utilization of solar energy, advantageously accompanied by electric power generation, containing the heat caption unit 1 that automatically follows the movement of the sun serving as a heat source, the sea water collecting tank 10, the pre-heating tank 11, the heat receiver 20 that ensures the energy supply, and the condensers 2, 3, 4 connected in line; the distilled water storage tanks 13 characterized by the fact that the sea water collecting tank 10 and the pre-heating tank 11 that pre-heats the sea water and cools the distilled steam are situated beside each other by level difference and that the adjoining walls of the two tanks have an opening for through-flow 11a or a through-flow tube; the discharge duct 8 of the pre-heating tank 11 is led into the condensers where the first condenser 2 is provided with a heater 72 heated by the heating agent, the second and the subsequent evaporators 3 are provided with a heating system consisting of pipe rings 73a utilizing hot vapour and pipes connecting the pipe rings; further, parabolic collector(s) 1 made up of module elements serving as heat caption unit(s) for the heating of the heat transferring agent that heats the first condenser 2; its (their heat collecting unit(s) that hold(s) the heating agent is (are) of funnel-shape at the bottom hollow, and the wall of the conical hollow is covered with a high heat-resistant metal or ceramic coating; inside the heat receiver 20 there are baffle plates 38 or pipe bundles for the heating of the heat transferring agent, where the inlet pipe of the receiver 20 is led to the discharge opening of the first condenser 2 discharging the cooled agent, while the discharge pipe of the heated agent is led to the hot agent inlet opening of the first condenser 2.

2. The equipment according to the claim point 1. is characterized by the fact that the heat receiver 20 is connected directly or indirectly to a heat-exchanger 90 that is connected to a turbogenerator 96.

3. The equipment according to claim point 1 is characterized by the fact that the parabolic collector(s) 1 has(have) a frame structure made of glass-texture reinforced synthetic resin, with oval "vertical "ribs 23 and annular rings perpendicular to the ribs, where the topmost ring 21 and the lowest ring 25 fix the "vertical" ribs 23 by pin joint and additional glueing; front inside, a parabolic mirror assembled from segments 30 is fixed to the frame construction; and the mirror is provided with a reflecting surface 35 on its inner surface.

4. The equipment according to claim point 3. is characterized by the fact that each segement 30 is fixed by spring bolts with washer 44 in an adjustable way and that there is supporting structure 22 fixing the receiver 20 and the supporting structure 22 is fixed to the upper orifice of the parabolic collector 1.

5. The equipment according to the claim point 3 is characterized by the fact that the outer surface 32 of the segments 30 is provided by bracing ribs 33 for keeping the form.

6. The equipment according to claim point 1 is characterized by the fact that the support of the parabolic collector 1 has ball-and-socket construction fixed to the foundation, consisting of a bearing part 53, formed as a hollow and coated by metal-steamed lead, a hollow steel ball 52 in the bottom bearing part 53 and an upper bearing part 51 fixed to the collector 1, formed as a basket and also fixed to the support construction.

7. Equipment according to the claim point 1 is characterized by the fact that the parabolic collector is fixed in its place by rods 61, 62 and one of the bars 62 opposite to each other is equipped with a driving mechanism controlled by electric signal; the other rods 61 are also provided with position fixing lock gear and the driving mechanism of the rods 62 is formed so that a toothed rack is attached to the upper part of the telescopic rod on both sides, and at its bottom part an electric motor 64 is situated with a gear wheel on its shaft, coupling through other gear wheels to the rack fixed to the upper part; the position fixing mechanism of the supporting rods is formed so that a toothed rack 63a is connected on both sides of the telescopic beams at its upper part, and at the bottom part locking forks 68 and an electromagnetic coil 69 releasing the forks are situated, where gear wheels 67 are coupled with the rack 63a on both sides, fastened with a smaller diameter, helical toothed gear 67a and the locking forks 68 are connected to the helical toothed gears 7a.

8. Equipment according to claim point 1. is characterized by the fact that the pipeline leading the heated heat transferring agent down 5 from the receiver 20 and the cooled agent upwards by pipeline 6 are routed through the opening in the centre of the parabolic collector 1 and the lines then are led through the basket-type upper bearing 51 and the steel ball 52 supporting the collector, where the upper bearing half 51 and the steel ball 52 are fixed to each other; further, perpendicularly situated pipe sections 56 are connected to the pipe sections 54 leaving the steel ball 52, jointed by means of vertical pipe sections 56 provided with articulated elbows 55 protruding into the pipe sections in sealed condition.

9. Equipment according to claim point 1. is characterized by the fact that the first condenser 2 is provided by cleaning blades 87 promoting the heat transfer and hindering deposits on the heater; the pipe discharging the cooled steam through the condensate separator 74 is led into the tank pre-heating sea water 11 serving as a condenser; into the vapour discharge pipe 7 a pump 71 is fitted producing vacuum in the tank and the vapour discharge pipe 7 of the last condenser tank 4 provided with a vacuum pump 71 is jointed after the discharge pipe of the heating vapour and let also into the sea water pre-heating tank 11 that further cools the distilled water as a condenser.

10. Equipment according to claim point 2 is characterized by the fact that the heat exchanger 90 consists of the boiler drum provided at the top with an inlet pipe section for the hot heat transferring agent 5 and by a discharge pipe section for the cooled agent 6 connected inside the boiler drum by a heating system consisting of pipe rings 73a and pipes 73b joining them; further, to the heat-exchanger 90 a feed water tank 98 is connected through a feed pump 99b and a pipeline, and on the upper part a turbogenerator 96 is jointed to to the high-pressure vapour discharge pipe; and the expanded vapour, after leaving the turbogenerator 96 is led into a condenser 97 and its discharge pipe 99a into the feed water tank 98.

## Patentansprüche

1. Vorrichtung zur Entsalzung von Meerwasser mit Sonnenenergie, vorzugsweise verbindend mit Erzeugung elektrischer Energie, bestehend aus einer Wärmeauffangeinheit (1), die der Bewegung als Wärmequelle dienender Sonne automatisch folgt, einem Meerwassersammelbehälter (10), einem Vorwärmungsbehälter (11), einem Wärmeauffangbehälter (20), der die Energieversorgung versichert, miteinander in Reihe geschalteten Verdampfer (2, 3, 4) und einem Sammelbehälter (13) für destilliertes Wasser, **dadurch gekennzeichnet**, daß der Meerwassersammelbehälter (10) und der die Vorwärmung des Meerwassers und die Abkühlung des verdunsteten Wasserdampfes durchführenden Vorwärmungsbehälter (11) mit einem Niveauunterschied nebeneinader angeordnet sind, an der miteinander benachbaren Wand der zwei Behälter ist Durchflußöffnung (11a) oder Durchflußrohr, die Meerwasserausführungsleitung (8) des Vorwärmungsbehälters (11) in die Verdampfungsbehälter ist eingeleitet, wo der erste Verdampfungsbehälter (2) mit dem durch Heizmedium erwärmten Heizkörper (72) versehen ist, der zweite und die weiteren Verdampfer (3, 4) sind mit einem zur Benützung der heißen Dämpfe geeignete Rohrringe (73a) ethaltenden Heizkörper versehen, wo Rohre (73b) die Röhrenringe verbinden, daß ein aus Modulelementen zusammengestellter parabolischer Kollektor (1) zur Aufwärmung des wärmezuführenden Mediums benutzt ist, am unteren wärmezuführendes Medium enthaltenden Halbe dessen sich ein trichterförmiger Behälter befindet, die kugelige Wand dessen mit hoch wärmebeständigem Metall oder keramischem Stoff übergezogen ist, daß Ablenkplatten (38) oder Rohrschlangen im Wärmeauffangbehälter zur Aufwärmung des wärmeübertragenden Mediums sind, daß das Einleitungsrohr des Wärmeauffangbehälters (20) zur das abgekühlte Medium ausführenden Öffnung des ersten Verdampfungsbehälters (2), das erwärmte wärmezuführende Medium ausführende Rohr aber zur das heiße wärmezuführende Medium einleitenden Öffnung des ersten Verdampfungsbehälters (2) geleitet ist.

2. Vorrichtung nach Anspruch 1, **dadurch gekennzeichnet**, daß der Wärmeauffangbehälter (20) unmittelbar oder mittelbar an den Wärmetauscher (90) angeschlossen ist, der mit dem Turbogenerator (96) verbunden ist

3. Vorrichtung nach Anspruch 1, **dadurch gekennzeichnet**, daß der parabolische Kollektor (1) ein aus mit Glasgewebe verstärkten, oval gekrümmten "senkrechten" Rippen (23) und aus den quer zu den Rippen herumlaufenden kreisförmigen Ringen (24) ausgeformtes Gerüstwerk aufweist, wobei der oberste Ring (21) und der unterste Ring (25) mit gedübelter Verbindung und mit das ergänzender Klebung die "senkrechten" Rippen (23) befestigen, weiterhin ist ein aus Segmenten (30) zusammengestellter, auf innerer Oberfläche (35) mit Reflexionsfläche versehener Parabolspiegel auf das Gerüstwerk angeordnet.

4. Vorrichtung nach Anspruch 3, **dadurch gekennzeichnet**, daß jedes Segment durch mit Unterlage versehene federnde Schrauben (44) auf einstellbare Art befestigt ist und es gibt ein Tragmittel (22), das den Wärmeauffangbehälter (20) befestigt, daß das Befestigungsmittel (22) in obere Öffnung des parabolischen Kollektors (1) befestigt ist.

5. Vorrichtung nach Anspruch 3, **dadurch gekennzeichnet**, daß die äußerliche Oberfläche (32) der Segmente (30) mit den die Formbeständigkeit dienenden Starrheitsrippen (33) versehen ist.

6. Vorrichtung nach Anspruch 1, **dadurch gekennzeichnet**, daß sie durch eine den Kollektor (1) unterstützende kugelgelenkige Konstruktion zum Fundament befestigt ist, die aus innen halbkugelförmigem, mit Hohlraum ausgebildetem, vorzugsweise mit metallgedämpftem Blei überzogenem unterem Lagerteil (53), aus im unteren Lagerteil sitzender hohler Stahlkugel (52), sowie aus zu dem Kollektor (1) verstärkte zu als Kolb ausgeformter Tragkonstruktion befestigtem oberem Lagerteil (51) zusammengestellt ist.

7. Vorrichtung nach Anspruch 1, **dadurch gekennzeichnet**, daß der parabolische Kollektor durch die Stangen (61, 62) auf seiner Lage befestigt ist, eine von den miteinander gegenüberstehenden Stangen mit einem durch elektronisches Zeichen geregelten Antriebsmechanismus versehen ist, daß die übrigen Stangen mit positionsbefestigendem Zahnrad und mit einem die Stangen antreibenden Mechanismus ebenfalls so versehen sind, daß sich eine gezahnte Zahnstange dem oberen Teil der teleskopischen Gestänge auf ihren beiden Seiten anschließt, auf unterem Teil der Zahnstange aber auf der Achse mit einem Zahnrad versehener Elektromotor (64) angeordnet ist, wo sich der auf die Achse des Elektromotors befestigte Zahnrad durch weitere Zahnräder der zum oberen Teil befestigten Zahnstange anschließt, daß die positionsbefestigende Konstruktion der Tragstangen so ausgestaltet ist, daß sich gezahnte Zahnstange (63a) dem oberen Teil der teleskopischen Gestänge auf beiden Seiten anschließt, auf unterem Teil der Zahnstange (63a) sind aber Verriegelungsgabeln (68) und die Verriegelungsgabeln aushebende elektromagnetische Spule (69) angeordnet, wobei sich Zahnräder (67) der Zahnstange (63a) beiderseits anschließen, die mit einem zweiten schrägverzahnten Zahnrad (67a) von kleinerem Durchmesser verbunden sind und die Verriegelungsgabeln schließen sich den schrägverzahnten Zahnrädern (7a) an.

8. Vorrichtung nach Anspruch 1, **dadurch gekennzeichnet**, daß die aus Wärmeauffangbehälter (20) das aufgeheizte wärmezuführende Medium abführende (5) und das abgekühlte wärmezuführende Medium aufführende Rohrleitung (6) durch die im Mittelpunkt des parabolischen Kollektors (1) ausgestaltete Öffnung durch den unter dem Kollektor angeordneten, als Korb ausgestalteten oberen Lagerteil (51) und durch die den Kollektor unterstützenden Stahlkugel (52) durchgeführt ist, wobei der obere Lagerteil (51) und die Stahlkugel (52) zueinander befestigt sind, weiterhin sind in der Nähe der aus der Stahlkugel (52) austretenden Rohrabschnitte auf jene einen Winkel bildend, zweckmäßigerweise senkrecht angeordnete weiterleitende Rohrabschnitte (56), die in die Rohrabschnitte dicht einreichende, gelenkig sich verdrehende, mit Knie ausgestaltete senkrechte Rohrabschnitte (56) verbinden.

9. Vorrichtung nach Anspruch 1, **dadurch gekennzeichnet**, daß der Verdampfer (2) zwecks der Begünstigung der Wärmeübergabe und der Verhinderung der Ablagerung auf dem Heizkörper mit Reinigungsflügeln (87) ausgerüstet ist, daß das abgekühlte Dampfausführungsrohr (9) durch den Kondenstopf (74) in den Meerwasser-Vorwärmungsbehälter (11) als in Kondensator geleitet ist, daß eine im Behälter vakuumerzeugende Pumpe (71) in das Dampfausführungsrohr (7) eingeschaltet ist, und daß das mit einer Vakuumpumpe (71) versehenes Dampfausführungsrohr des letzten Verdampfungsbehälters (4) und das Heizdampfausführungsrohr in den Meerwasser-Vorwärmungsbehälter (11), als in Kondensator geleitet ist.

10. Vorrichtung nach Anspruch 2, **dadurch gekennzeichnet**, daß der Wärmetauscher (90) aus einem Kesselkörper besteht, der oben mit einem zur Einleitung des heißen wärmezuführenden Stoffes dienenden Rohrabschnitt (5) und unten mit einem zur Ausführung des abgekühlten wärmezuführenden Stoffes dienenden Rohrabschnitt (6) versehen ist, die das aus Röhrenringen (73a) und aus die Röhrenringe verbindenden Rohren (73b) ausgestaltete System im Innenraum des Kesselkörpers verbindet, weiterhin ist ein Kesselwasserbehälter an den Wärmetauscher unten durch mit einer Förderpumpe (99b) versehene Rohrleitung (98) angeschlossen, daß der Turbogenerator (96) an das den befreienden Hochdruckdampf oben ausführende Rohr angeschlossen ist, daß der den Turbogenerator (96) ablassende expandierte Dampf in den Kondensator (97), die Ausführungsrohrleitung (99a) des Kondensators aber in den Kesselwasserbehälter (98) geleitet ist.

## Revendications

1. L'équipement servant pour le désallement de l'eau de mer à l'aide de l'exploitation de l'énergie solaire, favorablement combiné avec la production du courant électrique, qui embrasse l'unité de récipient de chaleur 1, qui poursuit automatiquement le mouvement du soleil servant comme une source de chaleur, le récipient de l'eau de mer 10, le récipient de préchauffage 11, le récipient de chaleur 20, qui renferme les évaporateurs 2, 3, 4 connectés en série et le récipient de l'eau 13 est caractérisé par là, que le récipient de l'eau de mer 10 et le récipient 11 servant pour le préchauffage de l'eau de mer et le refroidissement de la vapeur de l'eau évaporées sont placés à coté l'un de l'autre ave une différence de niveaux; un tuyau d'écoulement ou une ouverture de passage 11a se trouvent aux parois voisins des deux récipients; le tuyau de sorti de l'eau de mer 8 du récipient de préchauffage 11 est introduit dans les récipient d'évaporation, où le premier récipient d'évaporation 2 est muni d'un corps de chauffage 72, le deuxième et les autres évaporateurs 3, 4 sont munis d'un corps de chauffage contenant des anneaux de tuyau 73a aptes à l'exploitation des vapeurs chaudes, où les anneaux de tubes sont reliés avec les tubes 73b; en outre un collecteur parabolique 1 est assemblé des éléments modulaires pour l'échauffement de l'agent de transfert de chaleur servant au chauffage du premier récipient d'évaporation 2, où un récipient ayant la forme d'un entonnoir se trouve à la partie inférieure contenant l'agent de transfert de chaleur, le paroi conique duquel est couvert d'un métal à haute résistance thermique ou d'un matériel céramique; des plaques de déviation ou faisceaux de tubes se trouvent dans le récipient 38 servant au préchauffage de l'agent de transfert de chaleur; où le tuyau d'entrée du récipient de chaleur 20 est introduit dans l'ouverture de sortie de l'agent de transfert de chaleur refroidi du premier récipient d'évaporation 2 et le tuyau de sorti de l'agent de transfert de chaleur échauffé est introduit dans l'ouverture d'entrée de l'agent de transfert de chaleur chaud du premier récipient d'évaporation 2

2. L'équipement faisant l'objet de revendication, caractérisé par là, que le récipient de chaleur 20 est relié directement ou indirectement à l'échangeur de chaleur 90, qui est branché sur le turbogénérateur.

3. L'équipement faisant l'objet de revendication, caractérisé par là, que le(s) collecteur(s) parabolique(s) ont un squelette renforcé d'un tissue en verre, formé des ailettes "verticales" courbées en ovale et des bagues circulaires 24 perpendiculaires aux ailettes, où la bague la plus haute 21 et la bague la plus basse bloquent les ailettes "verticales" 23 à l'aide de chevillage, et un miroir parabolique muni d'une surface réfléchissante dans sa surface intérieure 35, assemblé des segments sont placés sur le squelette.

4. L'équipement faisant l'objet du troisième point de revendication, caractérisé par là, que tous les segments ont fixés par des vis de ressort 44 ayant des rondelles 31 ajustablement et il y a un dispositif de retenu 22, qui immobilise le récipient de chaleur 20; le dispositif de fixation 22 est fixé dans l'ouverture supérieure du collecteur parabolique 1.

5. L'équipement faisant l'objet du troisième point de revendication, caractérisé par là, qué la surface extérieure 32 des segments 30 est munie des ailettes de renforcement 33 servant au maintien.

6. L'équipement faisant l'objet du premier point de revendication, caractérisé par là, que le collecteur 1 est rattaché au socle avec un dispositif de soutient ayant un joint à bille, qui est assemblé d'une partie inférieure de palier 53 en forme de calotte à l'intérieure, formé avec un creux, et favorablement couvert de plomb métallisé, d'une sphère en acier creuse 52 se placant sur la partie inférieure du palier, ainsi que de la partie supérieure du palier 51 rattachée au système porteur formé en forme d'une corbeille relié au collecteur 1,

7. L'équipement faisant l'objet du premier point de revendication, caractérisé par là, que le colleteur parabolique est fixé à l'aide des tiges de retenu 61, 62 dans son position, et l'un des tiges en face les uns des autres est muni d'un mécanisme de propulsion commandé par une signe électrique; les autres tiges sont munies aussi d'une roue d'engrenage pour 1 fixation de la position et d'un mécanisme entraînant les tiges, et ainsi un crémaillère est rattachée à la partie supérieure des tiges télescopiques au deux cotés et à la partie inférieure un électromoteur 64 muni d'une roue d'engrenage sur son essieu est placé, où la roue d'engrenage fixée sur l'essieu de l'électromoteur s'engrène avec autre roues d'engrenage à la crémaillère fixée sur la parti supérieure; la structure des tiges de retenu est formé tellement, qu'une crémaillère ayant des dentures à tous les deux cotés 63 s'engrène à la partie supérieure des tiges télescopiques et à la partie inférieure de la crémaillère 63, les fourchettes de blocage 68 et l'électro-aimant 69 soulevant les fourchette de blocage est placé, où les roues d'engrenage 67 se rattachent à la crémaillère 63a, qui sont rattachée avec une seconde roue à engrenage hélicoïdal ayant un diamètre plus petit 67a, sont assemblées et les fourchettes de blocages se rattachent à des roues à engrenage hélicoïdal 7a.

8. L'équipement faisant l'objet du premier point de revendication, caractérisé par là, que la tuyauterie 5 déchargeant l'agent de transfert de chaleur échauffé du récipient de chaleur 20 et la tuyauterie 6 alimentant l'agent de transfert de chaleur refroidi sont conduit en travers de l'ouverture formée dans le milieu du colleteur parabolique 1, à travers la partie de palier exécutée en forme d'une corbeille 51 se trouvant au-dessous du collecteur et à travers la sphère en acier 52 soutenant le collecteur, où la partie supérieure 51 et la sphère en acier 52 sont fixés l'un à l'autre, en plus des sections de tubes s'étendant plus loin, sont placées à proximité des sections de tubes sortant de la sphère en acier 52 faisant un angle avec celles, favorablement positionnées perpendiculairement, qui sont reliées par des sections de tubes verticales 56 formées avec des coudes, détournable avec articulation et s'allongeant dans les sections de tubes en forme étanche.

9. L'équipement faisant l'objet du premier point de revendication, caractérisé par là, que l'évaporateur 2 est muni des plaque de nettoyage 87 pour favoriser le transfert de la chaleur et pour l'inhibition du développement de l'incrustation; en outre le tuyau de décharge de la vapeur refroidie 9 est introduit dans le récipient de préchauffage de l'eau de mer 11 en travers du séparateur à eau de condensation 74, comme un condenseur; en plus une pompe 71 produisant la vide dans le récipient est intercalée dans le tuyau de décharge de la vapeur 7; et le tuyau de décharge de la vapeur muni d'une pompe à vide 71 du dernier récipient d'évaporation 4 et le tuyau de décharge de la vapeur de chauffage est introduit dans le récipient servant pour l'échauffage de l'eau de mer 11, comme un condenseur.

10. L'équipement faisant l'objet du deuxième point de revendication, caractérisé par là, que l'échangeur de chaleur se compose d'un corps de chaudière, qui est muni en haut d'une section de tuyau 5 servant à l'introduction de l'agent de transfert de chaleur chaud et en bas d'une section de tuyau 6 servant au décharge de l'agent de transfert de chaleur refroidi, qui sont reliés l'un avec l'autre par le système de chauffage formé des anneaux de tubes 73a et des tuyaux reliant les anneaux de tubes 73b dans l'intérieure du corps de chaudière; en plus le récipient de l'eau d'alimentaire 98 est relié au échangeur de chaleur en bas à travers un tuyau muni d'une pompe d'alimentation 99b; le turbo-générateur 96 est relié au tuyau déchargeant la vapeur à haute pression dégagée en haut; la vapeur dégagée sortant le turbo-générateur 96 est introduite dans le condenseur 97 et le tuyau de décharge du condenseur 99a est introduit dans le récipient de l'eau d'alimentation 98.
